Europäisches Patentamt

European Patent Office

Office européen des brevets

(11) Veröffentlichungsnummer: **0 487 123 A1**

## EUROPÄISCHE PATENTANMELDUNG

(21) Anmeldenummer: **91202853.7**

(22) Anmeldetag: **05.11.91**

(51) Int. Cl.⁵: **B29B 17/02**, B03B 9/06, B03B 5/04

(30) Priorität: **21.11.90 DE 4037024**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **METALLGESELLSCHAFT Aktiengesellschaft Reuterweg 14 W-6000 Frankfurt am Main(DE)**

(72) Erfinder: **Kohaupt, Ulrich Flörsheimer Strasse 38 W-6093 Flörsheim 3(DE)**

(54) Verfahren zum Sortieren von Kunststoffteilchen.

㊗ Bei einem Verfahren zum Sortieren von aus Teilchen unterschiedlicher Kunststoffsorten bestehendem polydispersen Haufwerk nach der Dichte werden die Kunststoffteilchen in einer dünnen Schicht einem Naßschüttelherd aufgegeben.

Fig.2

Die Erfindung betrifft ein Verfahren zum Sortieren von aus Teilchen unterschiedlicher Kunststoffsorten bestehendem polydispersen, ggf. noch Metallteilchen enthaltenden Haufwerk nach der Dichte.

Der Rückführung von gebrauchten Kunststoffen in den Wirtschafts- und Materialkreislauf kommt in zunehmendem Maße eine gesteigerte Bedeutung zu, um den Rohstoff Erdöl bei der Primärproduktion zu schonen, die für die Verarbeitung des Erdöls zu Kunststoff notwendige Energie einzusparen und den Anteil des Kunststoffs an der Gesamtmüllmenge zu verringern. Sowohl Erdöl als auch ausreichendes Deponienvolumen stehen nur begrenzt zur Verfügung. Da es zahlreiche Kunststoffsorten gibt, die sich in ihren definierten mechanisch-technologischen und chemischen Eigenschaften unterscheiden und deshalb in verschiedensten Bereichen eingesetzt werden, macht es wenig Sinn, Kunststoffe gemischt zu sammeln und nahezu unbehandelt als Gemische weiterzuverarbeiten. Denn die daraus hergestellten Produkte besitzen nicht nur eine vergleichsweise niedrigere Wertigkeit, sondern sind darüber hinaus auch für eine mehrfache Wiederverwertung ungeeignet. Daraus ergibt sich die Forderung, jede Kunststoffsorte für die Rückführung in den Materialkreislauf getrennt zu sammeln und wieder zu verarbeiten. Von ebenso großer Bedeutung ist die Sortierung gemischter Kunststoffe. Die Vielzahl der heute in Anwendung befindlichen Kunststoffsorten und ihre Typen erschwert jedoch das getrennte flächendeckende Sammeln und macht die Einrichtung gesonderter Sammelstellen in Verbindung mit einem Abholsystem notwendig. Dies ist in nachteiliger Weise mit einem nicht unbeachtlichen Aufwand verbunden. Einzelne Kunststoffsorten werden heute sehr häufig im Verbund mit anderen Kunststoffsorten oder Werkstoffen verarbeitet. Die bei der Zerkleinerung von aus solchen Verbundwerkstoffen bestehenden, entsorgten Produkten anfallenden Haufwerke können nur durch mechanisches Sortieren getrennt werden, wobei sich allerdings Probleme wegen der geringen Dichteunterschiede der verschiedenen Kunststoffsorten ergeben.

Es ist die Aufgabe vorliegender Erfindung, ein Verfahren bereitzustellen, das die gezielte Anreicherung von Teilchen unterschiedlicher Kunststoffsorten eines ggf. noch Metallteilchen enthaltenden Haufwerks nach Dichtestufen mit hoher Reinheit und hohem Ausbringen ermöglicht.

Gelöst ist diese Aufgabe durch die Verwendung eines Naßschüttelherds. Die in dünner Schicht unter Zugabe von Wasser auf die Herdfläche aufgegebenen Kunststoffteilchen, ggf. noch Metallteilchen verteilen sich auf der Herdfläche. Durch die Schüttelbewegung der Herdfläche werden die Kunststoffe bzw. Metallteilchen bei jedem Hub entsprechend ihrem unterschiedlichen spezifischen Gewicht verschieden weit in der Bewegungsrichtung des Naßschüttelherds vorgeschleudert. Gleichzeitig strömt quer zur Bewegungsrichtung der Herdfläche Wasser, das durch ein Brauserohr in dünner Schicht an der oberen Längsseite der Herdfläche aufgegeben wird. Durch die Wirkung von Herdbewegung und Wasserbewegung werden die Kunststoffteilchen bzw. Metallteilchen entsprechend ihrer spezifischen Gewichte in Austrägen gewonnen. Die schwersten Teilchen werden am weitesten nach vorn bewegt und die leichtesten Teilchen in der Nähe der Aufgabe ausgetragen.

Im Rahmen der besonderen Ausgestaltung des erfindungsgemäßen Verfahrens beträgt die Korngröße der Kunststoffteilchen und ggf. der Metallteilchen > 0 bis 10 mm, vorzugsweise > 0 bis 6 mm, mit einem Maximum zwischen 2 und 4 mm.

Die Querneigung der Herdfläche des Naßschüttelherds beträgt < 5°, vorzugsweise 0,5 bis 2°, bei einer Hubamplitude von 50 bis 300 mm und einer Schwingungsdauer von 100 bis 200 ms.

In der Dichtestufe für die leichtesten Kunststoffteilchen wird Wasser in einer Menge von 2500 bis 3500 l/h und im Bereich der schwersten Teilchen, vorzugsweise der Metallteilchen, Wasser in einer Menge von 150 bis 450 l/h auf die Herdfläche aufgegeben, während bei den Kunststoffteilchen des Mittelprodukts die Wassermenge 1250 bis 1750 l/h beträgt.

Zweckmäßigerweise wird die im mittleren Bereich ausgetragene Dichtestufe zur Erhöhung des Ausbringens erneut dem Schüttelherd aufgegeben.

Dem Naßschüttelherd kann ein Schwimm-Sink-Scheider oder Hydrozyklon vorgeschaltet sein.

Die Erfindung ist anhand eines Ausführungsbeispiels im folgenden näher erläutert.

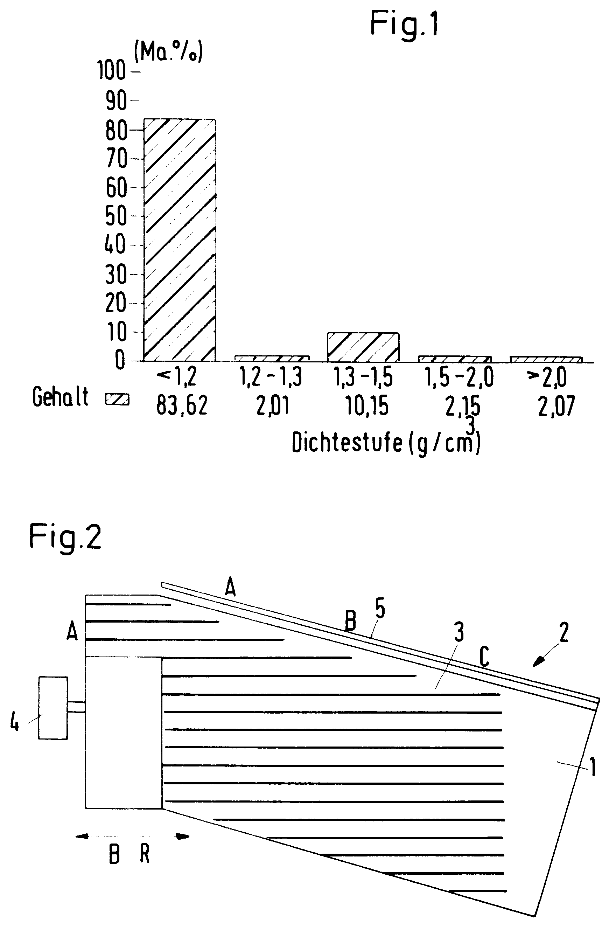

Ein durch die Zerkleinerung von Telefonen erzeugtes, eine Korngrößenverteilung von > 0 bis 6 mm mit einem deutlichen Korngrößenmaximum bei 2 bis 4 mm aufweisendes, polydisperses Haufwerk aus Kunststoffteilchen und Metallteilchen besteht gemäß Fig. 1 aus:

| | |
|---|---|
| 83,62 % | Kunststoffteilchen (ABS) mit einer Dichte von < 1,2 g/cm$^3$ |
| 2,01 % | Kunststoffteilchen (PC) mit einer Dichte von 1,2 bis 1,3 g/cm$^3$ |
| 10,50 % | Kunststoffteilchen (PVC, gefüllte Duroplaste) mit einer Dichte von 1,3 bis 1,5 g/cm$^3$ |
| 2,15 % | Kunststoffteilchen (Leiterplattenbruchstücke) mit einer Dichte von 1,5 bis 2,0 g/cm$^3$ |
| 2,07 % | Metallteilchen (Kupfer, Aluminium, Eisen) mit einer Dichte von > 2,0 g/cm$^3$. |

Dieses Gemisch wird in einer dünnen Schicht auf die in Fig. 2 dargestellte Herdfläche (1) eines Naßschüttelherdes (2) an der Stelle (A) aufgegeben. Die Längsachse der Herdfläche (1) bildet mit ihrer Bewegungsrichtung (BR) einen Winkel von 15°. Die mit Längsriffeln (3) versehene, nicht geneigte Herdfläche (1) wird durch einen Antrieb (4) in Bewegung versetzt. Die Hubamplitude der Herdfläche (1) beträgt 225 mm und ihre Schwingungsdauer 165 ms. Die über das am oberen Rand der Herdfläche (1) angeordnete Brauserohr (5) zugeführte Wassermenge beträgt im Abschnitt (A) (leichtere Dichtestufe) > 3000 l/h, im Abschnitt (C) (schwerere Dichtestufe) 300 l/h und im mittleren Abschnitt (B) 1500 l/h. Die Durchsatzleistung beträgt 400 kg/h.

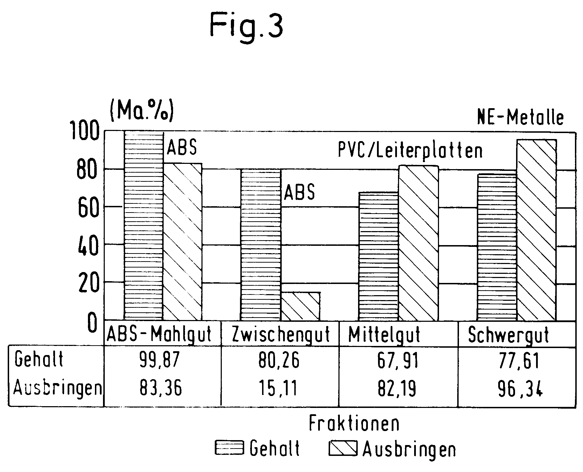

In Fig. 3 ist das Ergebnis der Sortierung der wesentlichen Stoffgruppen in vier Austrägen dargestellt. Durch Zusammenfassen werden zwei verwertbare Produkte, nämlich ABS-Mahlgut und das aus NE-Metallen bestehende Schwergut, erzeugt. Die ABS enthaltende Zwischengutfraktion ist nur gering angereichert und wird erneut der Aufgabe zugeführt. Die aus PVC/Leiterplatten bestehende Mittelgutfraktion wird entweitig entsorgt.

Die Ergebnisse der Sortierversuche zeigen deutlich, daß die gezielte Anreicherung von Kunststoffen einer bestimmten Dichtestufe mit einem Naßschüttelherd sehr erfolgreich durchgeführt werden kann. Im gleichen Arbeitsschritt können ebenfalls die vorhandenen Restmetallteilchen erheblich angereichert werden. Die Rückführung des gering angereicherten Zwischengutes bringt eine weitere Verbesserung des Gesamt-Ausbringens.

**Patentansprüche**

1. Verfahren zum Sortieren von aus Teilchen unterschiedlicher Kunststoffsorten bestehendem polydispersen, ggf. noch Metallteilchen enthaltenden Haufwerk nach der Dichte, dadurch gekennzeichnet, daß die Kunststoffteilchen bzw. Metallteilchen in einer dünnen Schicht einem Naßschüttelherd aufgegeben werden.

2. Verfahren nach Anspruch 1, dadurch gekennzeichnet, daß die Korngröße der Kunststoffteilchen bzw. Metallteilchen > 0 bis 10 mm, vorzugsweise > 0 bis 6 mm, mit einem Maximum zwischen 2 und 4 mm beträgt.

3. Verfahren nach den Ansprüchen 1 und 2, dadurch gekennzeichnet, daß die Querneigung des Naßschüttelherdes < 5°, vorzugsweise 0,5 bis 2°, beträgt.

4. Verfahren nach den Ansprüchen 1 bis 3, dadurch gekennzeichnet, daß die quer zur Bewegungsrichtung des Naßschüttelherdes aufgegebene Wassermenge im Bereich der leichtesten Dichtestufe 2500 bis 3500 l/h, im Bereich der schwersten Dichtestufe 150 bis 450 l/h und in der mittleren Dichtestufe 1250 bis 1750 l/h beträgt.

5. Verfahren nach den Ansprüchen 1 bis 4, dadurch gekennzeichnet, daß die Hubamplitude des Naßschüttelherdes 50 bis 300 mm beträgt.

6. Verfahren nach den Ansprüchen 1 bis 5, dadurch gekennzeichnet, daß die Schwingdauer des Naßschüttelherdes 100 bis 200 ms beträgt.

7. Verfahren nach den Ansprüchen 1 bis 6, dadurch gekennzeichnet, daß die im mittleren Bereich ausgetragene Dichtestufe erneut dem Naßschüttelherd zugeführt wird.

8. Verfahren nach einem der Ansprüche 1 bis 7, dadurch gekennzeichnet, daß dem Naßschüttelherd ein Schwimm-Sink-Scheider oder Hydrozyklon vorgeschaltet ist.

# Fig.1

(Ma.%)

| Dichtestufe (g/cm³) | <1,2 | 1,2 - 1,3 | 1,3 -1,5 | 1,5 -2,0 | >2,0 |
|---|---|---|---|---|---|
| Gehalt | 83,62 | 2,01 | 10,15 | 2,15 | 2,07 |

# Fig.2

## Fig.3

| | ABS-Mahlgut | Zwischengut | Mittelgut | Schwergut |
|---|---|---|---|---|
| Gehalt | 99,87 | 80,26 | 67,91 | 77,61 |
| Ausbringen | 83,36 | 15,11 | 82,19 | 96,34 |

Fraktionen

⊟ Gehalt  ◨ Ausbringen

Europäisches Patentamt

**EUROPÄISCHER RECHERCHENBERICHT**

Nummer der Anmeldung

EP 91 20 2853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 139 350 (KLÖCKNER-HUMBOLDT-DEUTZ AG)<br>* Seite 2, Zeile 13 - Seite 3, Zeile 14 *<br>* Seite 4, Zeile 2 - Seite 6, Zeile 6 *<br>* Seite 8, Zeile 10 - Zeile 17 *<br>* Seite 9, Zeile 11 - Seite 10, Zeile 5;<br>Ansprüche 1-10; Abbildung 1 *<br>--- | 1,2 | B29B17/02<br>B03B9/06<br>B03B5/04 |
| A | GB-A-2 191 118 (MASCHINENFABRIK ANDRITZ AG)<br>* Seite 1, Zeile 5 - Zeile 61; Ansprüche<br>1,4,15,17,18; Abbildungen 1,2A2B *<br>--- | 1,8 | |
| A | GB-A-1 425 855 (AMERICAN METAL CLIMAX INC.)<br>* Seite 1, Zeile 12 - Zeile 46 *<br>* Seite 3, Zeile 41 - Zeile 82; Ansprüche 1-16;<br>Abbildungen 1,2 *<br>--- | 1,3 | |
| A | DE-A-3 301 978 (CARL SCHENCK AG)<br>* das ganze Dokument *<br>--- | 1-6 | |
| A | FR-A-2 293 980 (STAMICARBON B.V.)<br>* das ganze Dokument *<br>--- | 1-8 | RECHERCHIERTE SACHGEBIETE (Int. Cl.5) |
| P,A | EP-A-0 431 582 (CONSIGLIO NAZIONALE DELLE RICERCHE)<br>* das ganze Dokument *<br>----- | 1,2 | B29B<br>B03B |

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1992 | MOLTO PINOL F.J. |